# EUROPEAN PATENT SPECIFICATION

(11) **EP 2 400 369 B1**
(45) Date of publication and mention of the grant of the patent: **08.08.2018**
(21) Application number: 10305668.5
(22) Date of filing: 22.06.2010
(51) Int. Cl.: G06F 1/32

(54) **A method for polling a universal integrated circuit card and an integrated circuit having an independent polling circuit**
Verfahren zur Abfrage einer universellen Karte mit integrierter Schaltung und eine integrierte Schaltung mit einer unabhängigen Abfrageschaltung
Procédé de sondage d'une carte à circuit intégré universelle et un circuit intégré possédant un circuit de sondage indépendant

(43) Date of publication of application: 28.12.2011
(73) Proprietor: Google Technology Holdings LLC, Mountain View, CA 94043 (US)
(72) Inventor: Gasparini, Stephane, Tournefeuille, 31170 (FR); Buhot, Thomas, Toulouse, 31400 (FR); Combes, Alain I., Toulouse, 31100 (FR)
(74) Representative: Clark, Jonathan Lister

(56) References cited:
- US-A1- 2008 165 780
- YUVRAJ AGARWAL ET AL: "Somniloquy: Maintaining network connectivity while your computer sleeps" TECHNICAL REPORT,, [Online] vol. MSR-TR-2008-42, 31 March 2008 (2008-03-31), pages 1-14, XP002594547 Retrieved from the Internet: URL:http://research.microsoft.com/pubs/705 60/tr-2008-42.pdf> [retrieved on 2010-07-26]
- "3rd Generation Partnership Project; Technical Specification Group Terminals; UICC-Terminal Interface; Physical and Logical Characteristics (3G TS 31.101 version 1.0.0)" 3GPP STANDARD; 3G TS 31.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 October 1999 (1999-10-01), pages 1-92, XP050373355

## Description

### FIELD

Disclosed are a method and an integrated circuit includes a first processing circuit and a second processing circuit where the second processing circuit is independent from the first processing circuit, the second processing circuit configured to poll the universal integrated circuit card while the first processing circuit is in an idle mode.

### BACKGROUND

The article "Somniloquy: Maintaining Network Connectivity While Your Computer Sleeps", by Yuvraj Agarwal et al. Technical Report, vol. MSR-TR-2008-42, 31 March 2008, Microsoft, XP002594547 discloses an approach for reducing the energy consumption of computers.

A 3G mobile communication device or mobile terminal such as a cellular telephone utilizes a universal integrated circuit card (UICC) that is easily installed into the device, typically upon purchase of the device. Also known as a "smart card" or a (U)SIM card, a UICC provides access to a service provider via a telephone number or other communication address, and can ensure the integrity and security of personal information. Applications such as phone books and message storage can also be included on a UICC so that they are easily transferable to another mobile terminal if the UICC is removed from one device and installed in a different device. A UICC typically holds a few hundred kilobytes but may in the future hold much more as services are added on.

In 2G networks, a subscriber identity module SIM card would include a SIM application or a UICC card with a SIM application on it. In 3G networks, depending upon whether the network is a global system for global communication (GSM) network, or a code division multiple access (CMDA) network, a UICC will include at least several different services and applications. The UICC has been introduced for 3G and is defined as a platform that can store different network applications among SIM for 2G, USIM for 3G, CSIM for CDMA. On the contrary the SIM and RUIM are a single card/application for 2G networks and the CDMA networks.

A UICC includes a central processing unit (CPU), a read-only memory (ROM), a random access memory (RAM), an electrically erasable programmable read-only memory (EEPROM) and input/output (I/O) circuits. The card slot is standardized so that a subscriber can easily move their wireless account and phone number from one handset to another handset. The use and content of the card can be protected by the use of PIN codes. It can contain other types of memory such as FLASH or FERAM.

Communication received and sent by the mobile terminal is therefore processed by the UICC. Accordingly, the mobile terminal must poll the UICC to determine data received by the UICC. A 3G mobile communication device utilizes software for this polling process as do a 2G and a CDMA, as well. A 2G handset polls the SIM card or the UICC and a CDMA phone polls the RUIM or the UICC (that contains a CSIM).

A UICC is configured for an active mode and an idle mode. In an active mode it may receive and/or provide a data flow. Otherwise it is in an idle mode. A mobile terminal will poll the UICC to ask it if it has something to say. The UICC will respond with a yes or a no. If the answer is yes, the mobile terminal will know to engage in a data flow with the UICC.

In addition to communication services, a UICC may include applications that are not communication service based. For example, such an application may include a SIM application toolkit that may be processed by the mobile terminal so that information such as charging information is annunciated to the user on the device's display.

### BRIEF DESCRIPTION OF THE DRAWINGS

FIG. 1 depicts an embodiment of a mobile terminal that includes components;
FIG. 2 depicts an integrated circuit or chipset that includes two processing circuits;
FIG. 3 depicts an integrated circuit that is the same or similar to the integrated circuit of

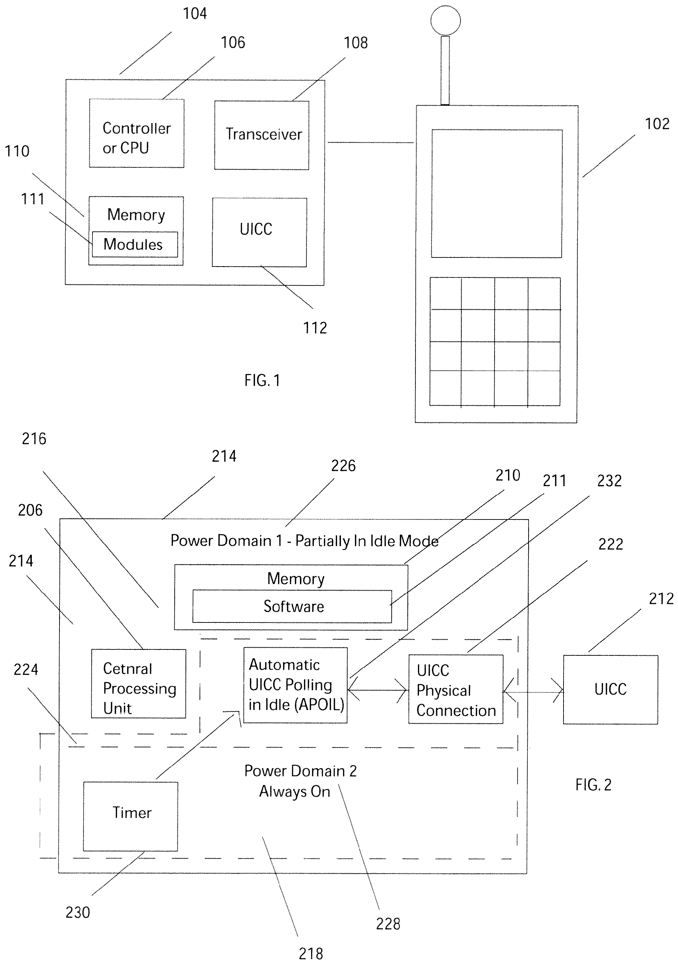

FIG. 2; and

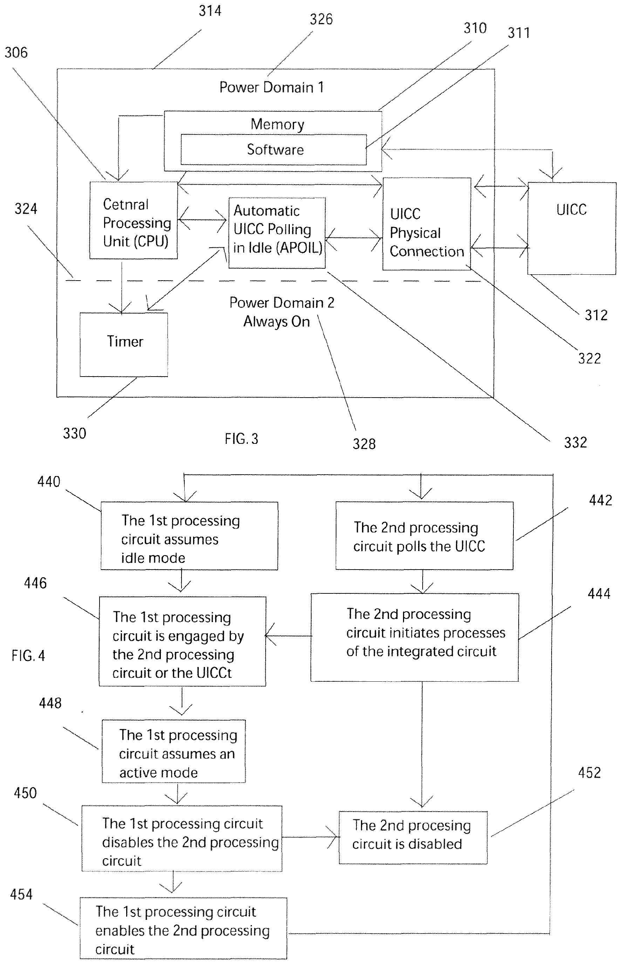

FIG. 4 is a flow chart of an embodiment of a disclosed method.

### DETAILED DESCRIPTION

A current mobile terminal software-based polling system of a UICC is estimated to have a current drain impact of 1 mA. In some systems, a software optimization can lower the current drain impact to 200 µA. However, such a software optimization is not compliant with the design rules of High Level Operating System kernel embedded in mobile terminals.

Disclosed are a method and an integrated circuit configured for communication with a universal integrated circuit card where the current drain impact of the polling process is negligible, that is, on the order of approximately 10 µA. By removing the polling software issues of polling a UICC, there may also be an improved software architecture configuration associated with the mobile terminal.

The disclosed integrated circuit includes a first processing circuit and a second processing circuit. The first processing circuit is configured for active mode and idle mode and is configured for communication with the universal integrated circuit card.

The second processing circuit is independent from the first processing circuit, the second processing circuit configured to poll the universal integrated circuit card while the first processing circuit is in an idle mode.

Between the first processing circuit and the second processing circuit are two different power domains. The first power domain can be in active mode or idle mode. The second power domain is "always on." At least a portion of the second processing circuit is within the second power domain.

The instant disclosure is provided to explain in an enabling fashion the best modes of making and using various embodiments in accordance with the present invention. The disclosure is further offered to enhance an understanding and appreciation for the invention principles and advantages thereof, rather than to limit in any manner the invention. While the preferred embodiments of the invention are illustrated and described here, it is clear that the invention is not so limited. Numerous modifications, changes, variations, substitutions, and equivalents will occur to those skilled in the art having the benefit of this disclosure without departing from the spirit and scope of the present invention as defined by the following claims.

It is understood that the use of relational terms, if any, such as first and second, up and down, and the like are used solely to distinguish one from another entity or action without necessarily requiring or implying any actual such relationship or order between such entities or actions.

Much of the inventive functionality and many of the inventive principles are best implemented with or in software programs or instructions and integrated circuits (ICs) such as application specific ICs. In the interest of brevity and minimization of any risk of obscuring the principles and concepts according to the present invention, discussion of such software and ICs, if any, is limited to the essentials with respect to the principles and concepts within the preferred embodiments.

FIG. 1 depicts an embodiment of a mobile terminal 102 that includes components 104 including one or more controllers or central processing units 106, at least one transceiver 108, memory 110 that can store, for example, software modules 111 and a UICC 112 as described above. For example, modules 111 can include a control module.

The modules can carry out certain processes of the methods as described herein. The modules can be implemented in software, such as in the form of one or more sets of prestored instructions, and/or hardware, which can facilitate the operation of the mobile station or electronic device as discussed below. The modules may be installed at the factory or can be installed after distribution by, for example, a downloading operation. The operations in accordance with the modules will be discussed in more detail below.

The mobile terminal 102 can be any type of mobile terminal. The mobile terminal 102 may be implemented as a cellular telephone (also called a mobile phone). The mobile communication device 102 represents a wide variety of devices that have been developed for use within various networks. Such handheld communication devices include, for example, cellular telephones, messaging devices, personal digital assistants (PDAs), notebook or laptop computers incorporating communication modems, mobile data terminals, application specific gaming devices, video gaming devices incorporating wireless modems, and the like. Any of these portable devices may be referred to as a mobile station or user equipment. Herein, wireless communication technologies available via the UICC 112 may include, for example, voice communication, the capability of transferring digital data, SMS messaging, Internet access, multi-media content access voice over internet protocol (VoIP), and/or WiFi.

In addition to communication services, a UICC 112 may include applications that are not communication service based. For example, such an application may include an application based on SIM Toolkit. SIM Toolkit or CAT (Card Application Toolkit) is related to telecom applications only. On the other hand, a Javacard is a smartcard OS technology that can be used to make UICC, banking or access cards. For Javacard applications that do not need to be polled, there is no polling. A UICC card, that is Javacard based, can contain Javacard applications (that have no relations with teleceom) besides the USIM or SIM applications. SIM Toolkit is for 2G SIM cards whereas CAT is for UICC cards. It is understood that as the UICC 112 and related technology is under constant change and that any and all future applications and processes are within the scope of this discussion. Applications are added and revised, and their polling requirements are changed. It is understood that certain current and future applications may not need polling and are within the scope of this discussion.

FIG. 2 depicts an integrated circuit or chipset 214 that includes two processing circuits, a first processing circuit 216 and a second processing circuit 218.

Separate from the chipset 214 is the UICC 212. There is a physical connection 222 between the UICC 212 and the integrated circuit 214. As mentioned above, in a mobile terminal 102 (see FIG. 1), the UICC 212 is easily installed into the device 102.

The integrated circuit 214 is separated into two power domains as indicated by the dashed line 224. A first power domain 226 in this example is in "idle mode." The second power domain 228 is "always on." It is understood that the "always on" aspect of the second power domain 228 is relative to the first power domain having an active mode and an idle mode. The second power domain may be in idle mode or switched off depending upon the circumstances, for example, when the device is off.

The second power domain 228 includes a timer 230. The second power domain 228 is separate from the first power domain 226 as they depend upon different regulators. The main or first power domain 226, including the UICC physical connection 222 and APOIL 232, can be in idle or sleep mode. The second power domain 228 including the timer 230 is "always on."

While the first power domain 226 is in "idle mode," the timer 230 can be in communication with the Automatic UICC Polling in Idle Mode (APOIL) component 232. The hardware timer 230 is within the second power domain 228 that is "always on." The APOIL 232 is within the first power domain 226 that can be in either "idle mode" or "active mode." The hardware timer 230 can awaken the APOIL 232, but not the CPU 206 so that the APOIL 232 can process a status command or inquiry (e.g., a STATUS APDU command) through the UICC physical connection 222 to the UICC 212 as to whether there is anything to report. That is the APOIL 232 moves from "idle mode" to "active mode" on timer 230 notification (e.g., timer expiration).

The UICC 212 will either say "yes" or "no." If it says "no" the answer is relayed through the UICC physical connection 222 to the APOIL 232, the APOIL 232 will return to "idle mode." That process can repeat until the UICC 212 has something to report or for another reason the process is stopped. For example, if the response from the UICC is beyond the capability of the APOIL 232, for example, there is an error message as a response the APOIL 232 can hand the process over to the CPU 206, in which case the Power Domain 1 then would be in "active mode."

As mentioned above, in some systems, a software optimization can lower the current drain impact to 200 µA. That would mean that instead of utilizing the disclosed APOIL 232 in the first power domain 226 as shown that periodically is awakened by a timer in the second domain 228, a software module of software 211 would involve the central processing unit 206, bringing it to full power to query the UICC 212 for a similar result as the disclosed APOIL 232. In this way, the disclosed integrated circuit having two processing circuits 216 and 218 and two power domains 226 and 228, both configured for communication with the UICC 212 can have a substantially reduced current drain impact for the polling process, that is, on the order of approximately 10 µA.

FIG. 3 depicts an integrated circuit 314 that is the same or similar to the integrated circuit 214 of FIG. 2. For simplicity, the indication of two processing circuits, a first processing circuit 216 and a second processing circuit 218 of FIG. 2 is not shown.

It is understood that a UICC 312 with any capability is within the scope of this discussion. For example, as mentioned, in certain circumstances, the UICC 312 would not need to be polled, and the UICC may indicate to the mobile terminal's 102 (see FIG. 1) controller 306 to cease polling during an application process. The CPU 306 may then re-arm a hardware polling timer 330.

FIG. 3 depicts that components of both processing circuits 216 and 218 of FIG. 2 are configured for communication with one another depending upon the circumstances and the capabilities of the UICC 312. As mentioned above, polling may cease in accordance with functions of the UICC 312. For example, the UICC 312 may communicate directly with the software 311 of the memory module 310 and not involve the CPU 306. On the other hand, the UICC 312 may directly involve the CPU 306. There may be other reasons that polling by the APOIL 332 ceases and the first processing circuit 216 may enable and/or disable the second processing circuit 218 by enabling the timer 330 or the APOIL 332 itself.

FIG. 4 is a flow chart of an embodiment of a disclosed method. As discussed above, in a power saving mode, the first processing circuit 216 (see FIG. 2) can assume 440 an idle mode while the second processing circuit 218 polls 442 the universal integrated circuit card. Under particular circumstances, the second processing circuit 218 can initiate 444 various processes of the integrated circuit based upon dataflow of the universal integrated circuit card while the first processing circuit remains in idle mode. On the other hand, the second processing circuit 218 or the UICC 312 (see FIG. 3) can engage 446 the second processing circuit, for example when there is an error message from the UICC 312. Under particular circumstances, the first processing circuit can assume 448 an active mode. In other particular circumstances the first processing circuit 216 can disable 450 the second processing circuit 218 so that it is disabled 452. In yet other particular circumstances, the first processing circuit 216 can enable 454 the second processing circuit 218 so that it polls 442 the UICC and the first processing circuit 216 resumes 440 the idle mode.

This disclosure is intended to explain how to fashion and use various embodiments in accordance with the technology rather than to limit the true, intended, and fair scope and spirit thereof. The foregoing description is not intended to be exhaustive or to be limited to the precise forms disclosed. Modifications or variations are possible in light of the above teachings. The embodiment(s) was chosen and described to provide the best illustration of the principle of the described technology and its practical application, and to enable one of ordinary skill in the art to utilize the technology in various embodiments and with various modifications as are suited to the particular use contemplated. The invention is defined in the appended claims.

## Claims

1. An integrated circuit (214) configured for communication with a universal integrated circuit card (212), the integrated circuit being **characterized by** comprising:
a first processing circuit (216) configured for communication with the universal integrated circuit card said first processing unit being configured for active mode and idle mode, the first processing circuit (216) including a universal integrated circuit card physical connection (222) and an automatic universal integrated circuit card polling in idle mode component (232);
a second processing circuit (218) that is independent from the first processing circuit and configured for communication with the universal integrated circuit card, the second processing circuit configured to poll the universal integrated circuit card while the first processing circuit is in an idle mode, the second processing circuit (218) including a polling timer (230), the automatic universal integrated circuit card polling in idle mode component (232) configured to move between an idle mode and active mode based on a notification from the polling timer (230).

2. The integrated circuit of claim 1 wherein the second processing circuit (218) is configured to initiate (444) communication with the first processing circuit (216) when particular dataflow is processed by the universal integrated circuit card (212).

3. The integrated circuit of claim 1 further comprising a control module (111) in communication with the first processing circuit (216) that can enable the second processing circuit. (218).

4. The integrated circuit of claim 1 further comprising a control module (111) in communication with the first processing circuit (216) that can disable the second processing circuit (218).

5. The integrated circuit of claim 1 wherein the integrated circuit (214) comprises a first power domain (226) and a second power domain (228).

6. The integrated circuit of claim 5 wherein the second power domain (228) is configured to be always in an active mode (442).

7. A method of operating an integrated circuit configured for communication with a universal integrated circuit card comprising a first processing circuit configured for communication with a universal integrated circuit card and configured for active mode and idle mode, the first processing circuit (216) including a universal integrated circuit card physical connection (222) and an automatic universal integrated circuit card polling in idle mode component (232); and a second processing circuit within a power domain different from the power domain of the first processing circuit, the second processing circuit configured for communication with the universal integrated circuit card and configured to poll the universal integrated circuit card while the first processing circuit is in an idle mode, the second processing circuit(218) including a polling timer (230), the method comprising:
the first processing circuit (216) assuming an idle mode (440);
the second processing circuit (218) polling the universal integrated circuit card (212) while the first processing circuit is in idle mode;
the automatic universal integrated circuit card polling in idle mode component (232) moving between an idle mode and active mode based on a notification from the polling timer (230).

8. The method of claim 7, comprising: the second processing circuit (218) initiating (444) particular processes of the integrated circuit (214) based upon dataflow of the universal integrated circuit card (212) while the first processing circuit (216) remains in idle mode (440).

9. The method of claim 7, comprising: the first processing circuit (216) enabling (454) the second processing circuit (218).

10. The method of claim 7, comprising: the first processing circuit (216) disabling (450) the second processing circuit (218).

11. The method of claim 7, comprising: the second processing circuit (218) communicating (444) with the first processing circuit (216) so that the first processing circuit assumes active mode (448) when the universal integrated circuit card (212) provides a dataflow.

12. The method of claim 7, comprising: the second processing circuit (218) communicating with the first processing circuit (216) so that the first processing circuit (448) assumes active mode when the universal integrated circuit card (212) provides an error message.

## Patentansprüche

1. Integrierte Schaltung (214), die zur Kommunikation mit einer universellen integrierten Schaltungskarte (212) konfiguriert ist, wobei die integrierte Schaltung **dadurch gekennzeichnet ist, dass** sie umfasst:
eine erste Verarbeitungsschaltung (216), die zur Kommunikation mit der universellen integrierten Schaltungskarte konfiguriert ist, wobei die erste Verarbeitungseinheit für aktiven Modus und Leerlaufmodus konfiguriert ist, wobei die erste Verarbeitungsschaltung (216) eine physische Verbindung (222) mit einer universellen integrierten Schaltungskarte und eine automatische Abfrage der universellen integrierten Schaltungskarte in der Leerlaufmoduskomponente (232) beinhaltet;
eine zweite Verarbeitungsschaltung (218), die unabhängig von der ersten Verarbeitungsschaltung, und zur Kommunikation mit der universellen integrierten Schaltungskarte konfiguriert ist, wobei die zweite Verarbeitungsschaltung zur Abfrage der universellen integrierten Schaltungskarte konfiguriert ist, während sich die erste Verarbeitungsschaltung in einem Leerlaufmodus befindet, wobei die zweite Verarbeitungsschaltung (218) einen Abfragezeitgeber (230) beinhaltet, wobei die automatische Abfrage der universellen integrierten Schaltungskarte in der Leerlaufmoduskomponente (232) konfiguriert ist, um sich basierend auf einer Benachrichtigung von dem Abfragezeitgeber (230) zwischen einem Leerlaufmodus und aktiven Modus zu bewegen.

2. Integrierte Schaltung nach Anspruch 1, wobei die zweite Verarbeitungsschaltung (218) zum Einleiten (444) einer Kommunikation mit der ersten Verarbeitungsschaltung (216) konfiguriert ist, wenn ein bestimmter Datenfluss von der universellen integrierten Schaltungskarte (212) verarbeitet wird.

3. Integrierte Schaltung nach Anspruch 1, ferner umfassend ein Steuermodul (111) in Kommunikation mit der ersten Verarbeitungsschaltung (216), die die zweite Verarbeitungsschaltung aktivieren kann. (218).

4. Integrierte Schaltung nach Anspruch 1, ferner umfassend ein Steuermodul (111) in Kommunikation mit der ersten Verarbeitungsschaltung (216), die die zweite Verarbeitungsschaltung (218) deaktivieren kann.

5. Integrierte Schaltung nach Anspruch 1, wobei die integrierte Schaltung (214) einen ersten Leistungsbereich (226) und einen zweiten Leistungsbereich (228) umfasst.

6. Integrierte Schaltung nach Anspruch 5, wobei die zweite Leistungsdomäne (228) so konfiguriert ist, dass sie sich immer in einem aktiven Modus (442) befindet.

7. Verfahren zum Betrieb einer integrierten Schaltung, die zur Kommunikation mit einer universellen integrierten Schaltungskarte konfiguriert ist, umfassend eine erste Verarbeitungsschaltung, die zur Kommunikation mit einer universellen integrierten Schaltungskarte konfiguriert ist und für aktiven Modus und Leerlaufmodus konfiguriert ist, wobei die erste Verarbeitungsschaltung (216) eine physische Verbindung (222) mit einer universellen integrierten Schaltungskarte und eine automatische Abfrage der universellen integrierten Schaltungskarte in der Leerlaufmoduskomponente (232) beinhaltet; und eine zweite Verarbeitungsschaltung innerhalb einer Leistungsdomäne, die sich von der Leistungsdomäne der ersten Verarbeitungsschaltung unterscheidet, wobei die zweite Verarbeitungsschaltung zur Kommunikation mit der universellen integrierten Schaltungskarte konfiguriert ist, und konfiguriert ist, um die universelle integrierte Schaltungskarte abzufragen, während sich die erste Verarbeitungsschaltung in einem Leerlaufmodus befindet, wobei die zweite Verarbeitungsschaltung (218) einen Abfragezeitgeber (230) beinhaltet, wobei das Verfahren umfasst:
dass die erste Verarbeitungsschaltung (216) einen Leerlaufmodus (440) annimmt;
die zweite Verarbeitungsschaltung (218) die universelle integrierte Schaltungskarte (212) abfragt, während sich die erste Verarbeitungsschaltung im Leerlaufmodus befindet;
die automatische universelle integrierte Schaltungskartenabfrage in der Leerlaufmoduskomponente (232), die sich zwischen einem Leerlaufmodus und aktiven Modus basierend auf einer Benachrichtigung durch den Abfragezeitgeber (230) bewegt.

8. Verfahren nach Anspruch 7, umfassend:
die zweite Verarbeitungsschaltung (218) bestimmte Prozesse der integrierten Schaltung (214) basierend auf Datenfluss der universellen integrierten Schaltungskarte (212) initiiert (444), während die erste Verarbeitungsschaltung (216) im Leerlaufmodus (440) bleibt.

9. Verfahren nach Anspruch 7, umfassend:
dass die erste Verarbeitungsschaltung (216) die zweite Verarbeitungsschaltung (218) aktiviert (454).

10. Verfahren nach Anspruch 7, umfassend:
dass die erste Verarbeitungsschaltung (216) die zweite Verarbeitungsschaltung (218) deaktiviert (450).

11. Verfahren nach Anspruch 7, umfassend:
die zweite Verarbeitungsschaltung (218) mit der ersten Verarbeitungsschaltung (216) kommuniziert (444), sodass die erste Verarbeitungsschaltung aktiven Modus (448) annimmt, wenn die universelle integrierte Schaltungskarte (212) einen Datenfluss bereitstellt.

12. Verfahren nach Anspruch 7, umfassend:
die zweite Verarbeitungsschaltung (218) mit der ersten Verarbeitungsschaltung (216) kommuniziert, sodass die erste Verarbeitungsschaltung (448) aktiven Modus annimmt, wenn die universelle integrierte Schaltungskarte (212) eine Fehlermeldung bereitstellt.

## Revendications

1. Circuit intégré (214) configuré pour la communication avec une carte de circuit intégré universelle (212), le circuit intégré étant **caractérisé en ce qu'**il comprend :
un premier circuit de traitement (216) configuré pour la communication avec la carte de circuit intégré universelle, ladite première unité de traitement étant configurée pour un mode actif et un mode veille, le premier circuit de traitement (216) incluant une connexion physique de carte de circuit intégré universelle (222) et un composant d'interrogation automatique en mode veille de la carte de circuit intégré universelle (232);
un deuxième circuit de traitement (218) qui est indépendant du premier circuit de traitement et configuré pour la communication avec la carte de circuit intégré universelle, le deuxième circuit de traitement étant configuré pour interroger la carte de circuit intégré universelle pendant que le premier circuit de traitement est en mode veille, le deuxième circuit de traitement (218) incluant un temporisateur d'interrogation (230), le composant d'interrogation automatique en mode veille de la carte de circuit intégré universelle (232) étant configuré pour commuter entre un mode veille et un mode actif sur la base d'une notification du temporisateur d'interrogation (230).

2. Circuit intégré selon la revendication 1, dans lequel le deuxième circuit de traitement (218) est configuré pour initier (444) la communication avec le premier circuit de traitement (216) lorsqu'un flux de données particulier est traité par la carte de circuit intégré universelle (212).

3. Circuit intégré selon la revendication 1, comprenant, en outre, un module de contrôle (111) en communication avec le premier circuit de traitement (216) qui peut activer le deuxième circuit de traitement (218).

4. Circuit intégré selon la revendication 1, comprenant, en outre, un module de contrôle (111) en communication avec le premier circuit de traitement (216) qui peut désactiver le deuxième circuit de traitement (218).

5. Circuit intégré selon la revendication 1, dans lequel le circuit intégré (214) comprend un premier domaine de puissance (226) et un deuxième domaine de puissance (228) .

6. Circuit intégré selon la revendication 5, dans lequel le deuxième domaine de puissance (228) est configuré pour être toujours en mode actif (442).

7. Procédé pour faire fonctionner un circuit intégré configuré pour la communication avec une carte de circuit intégré universelle comprenant un premier circuit de traitement configuré pour la communication avec la carte de circuit intégré universelle et configuré pour un mode actif et un mode veille , le premier circuit de traitement (216) incluant une connexion physique de carte de circuit intégré universelle (222) et un composant d'interrogation automatique en mode veille de la carte de circuit intégré universelle (232) ; et un deuxième circuit de traitement dans un domaine de puissance différent du domaine de puissance du premier circuit de traitement, le deuxième circuit de traitement étant configuré pour la communication avec la carte de circuit intégré universelle et configuré pour interroger la carte de circuit intégré universelle lorsque le premier circuit de traitement est en mode veille, le deuxième circuit de traitement (218) incluant un temporisateur d'interrogation (230), le procédé comprenant :
le premier circuit de traitement (216) adoptant un mode veille (440) ;
le deuxième circuit de traitement (218) interrogeant la carte de circuit intégré universelle (212) pendant que le premier circuit de traitement est en mode veille ;
le composant d'interrogation automatique en mode veille de la carte de circuit intégré universelle (232) commutant entre un mode veille et un mode actif sur la base d'une notification du temporisateur d'interrogation (230).

8. Procédé selon la revendication 7, comprenant :
le deuxième circuit de traitement (218) initiant (444) des procédés particuliers du circuit intégré (214) sur la base d'un flux de données de la carte de circuit intégré universelle (212) pendant que le premier circuit de traitement (216) est en mode veille (440).

9. Procédé selon la revendication 7, comprenant :
le premier circuit de traitement (216) activant (454) le deuxième circuit de traitement (218).

10. Procédé selon la revendication 7, comprenant :
le premier circuit de traitement (216) désactivant (450) le deuxième circuit de traitement (218).

11. Procédé selon la revendication 7, comprenant :
le deuxième circuit de traitement (218) communicant (444) avec le premier circuit de traitement (216) de sorte que le premier circuit de traitement adopte le mode actif (448) lorsque la carte de circuit intégré universelle (212) fournit un flux de données.

12. Procédé selon la revendication 7, comprenant :
le deuxième circuit de traitement (218) communicant avec le premier circuit de traitement (216) de sorte que le premier circuit de traitement (448) adopte le mode actif lorsque la carte de circuit intégré universelle (212) fournit un message d'erreur.
